# FASCICULE DE BREVET EUROPEEN

(11) **EP 3 271 215 B1**
(45) Date de publication et mention de la délivrance du brevet: **03.04.2019**
(21) Numéro de dépôt: 16712956.8
(22) Date de dépôt: 25.02.2016
(51) Int. Cl.: B60R 13/08, G10K 11/168, B29C 44/58

(54) **PROCÉDÉ DE RÉALISATION D'UN ÉCRAN DE PROTECTION ACOUSTIQUE POUR MOTEUR DE VÉHICULE AUTOMOBILE ET ÉCRAN OBTENU PAR UN TEL PROCÉDÉ**
VERFAHREN ZUR HERSTELLUNG EINER GERÄUSCHABSCHIRMUNG FÜR EINEN KRAFTFAHRZEUGMOTOR UND ABSCHIRMUNG ERHALTEN DURCH EIN SOLCHES VERFAHREN
METHOD FOR PRODUCING AN ACOUSTIC PROTECTIVE SCREEN FOR A MOTOR VEHICLE ENGINE AND SCREEN OBTAINED BY SUCH A METHOD

(30) Priorité: 20.03.2015 FR 1552315
(43) Date de publication de la demande: 24.01.2018
(73) Titulaire: TREVES Products, Services & Innovation, 75008 Paris (FR)
(72) Inventeur: WAXIN, Laurent, 02130 Dravegny (FR)
(74) Mandataire: Sayettat, Julien Christian
(86) Numéro de dépôt international: PCT/FR2016/050439
(87) Numéro de publication internationale: WO 2016/151209

(56) Documents cités:
- EP-A1- 2 039 488
- EP-A1- 2 503 040
- EP-A2- 1 555 105
- WO-A1-03/021096
- DE-A1- 2 423 099

## Description

L'invention concerne un procédé de réalisation d'un écran de protection acoustique pour moteur de véhicule automobile et un écran obtenu par un tel procédé. Le document EP 1 555 105 A2 est considéré comme l'état de la technique le plus proche de l'objet de l'invention, et divulgue un procédé de réalisation d'un écran pour moteur de véhicule automobile, ledit procédé comprenant les étapes suivantes :
- prévoir une feuille, ladite feuille étant pourvue d'une pluralité de micro-perforations,
- prévoir un matelas de fibres comprenant une résine thermodurcissable,
- superposer ladite feuille et ledit matelas dans un moule de thermocompression, de manière à comprimer ledit matelas en liant lesdites fibres entre elles, pour former une couche, et de manière à associer ladite feuille à ladite couche par ladite résine, pour obtenir une coque comprenant ladite couche et ladite feuille,
- disposer ladite coque contre la paroi supérieure d'un moule, ladite paroi étant pourvue d'évents de dégazage, ladite feuille étant tournée vers ladite paroi,
- injecter dans ledit deuxième moule un mélange précurseur de mousse de polyuréthanne poreuse à l'air, la paroi inférieure dudit deuxième moule étant dépourvue de revêtement étanche,
- après expansion de la mousse, démouler l'écran obtenu, dans lequel la mousse forme un support surmoulant ladite couche.

Il est connu de mettre en oeuvre un procédé de réalisation d'un écran de protection acoustique pour moteur de véhicule automobile, ledit procédé comprenant les étapes suivantes :
- prévoir une feuille métallique réfléchissante de protection thermique,
- prévoir un matelas de fibres comprenant une résine thermodurcissable,
- superposer ladite feuille et ledit matelas dans un premier moule de thermocompression, de manière à comprimer ledit matelas en liant lesdites fibres entre elles, pour former une couche d'isolation thermique, et de manière à associer ladite feuille à ladite couche par ladite résine, pour obtenir une coque de protection thermique comprenant ladite couche et ladite feuille,
- disposer ladite coque contre la paroi supérieure d'un deuxième moule, ladite feuille étant tournée vers ladite paroi,
- injecter dans ledit deuxième moule un mélange précurseur de mousse de polyuréthanne poreuse à l'air, la paroi inférieure dudit deuxième moule étant dépourvue de revêtement étanche,
- après expansion de la mousse, démouler l'écran obtenu, dans lequel la mousse forme un support surmoulant ladite couche.

La présence d'une telle feuille de protection thermique s'impose quand le support ne présente pas une résistance suffisante à la chaleur dégagée par le moteur.

Quant à l'insertion d'une couche d'isolation entre la feuille métallique et le support, elle est requise lorsque ladite feuille ne réfléchit pas suffisamment la chaleur émise par le moteur pour assurer la protection thermique attendue, ce qui pourrait conduire à une dégradation du support.

La transmission de la chaleur de la feuille vers le support est alors atténuée par la couche d'isolation, ce qui permet d'assurer de façon satisfaisante la protection thermique dudit support.

Par ailleurs, le fait que la paroi inférieure du deuxième moule soit dépourvue de revêtement étanche permet au support de jouer pleinement son rôle d'absorption acoustique, sa face externe étant pleinement susceptible de recevoir, du côté opposé à celui du moteur, le bruit issu dudit moteur pour l'absorber.

On notera enfin que le procédé sus-décrit permet un accrochage robuste entre la couche d'isolation et le support, ceci du fait d'une pénétration partielle de la mousse dudit support dans ladite couche, ladite mousse enrobant les fibres de surface de ladite couche.

Cependant, avec le procédé exposé ci-dessus, on obtient un écran dont la face externe du support en mousse - c'est à dire la face opposée à celle recevant la couche d'isolation - peut présenter des défauts, tels des cratères, préjudiciables à l'aspect de l'écran.

Un tel inconvénient est causé par une mauvaise évacuation des gaz issus de la réaction de formation de la mousse, lesdits gaz ne pouvant s'évacuer, du fait de la barrière réalisée par la feuille métallique, par le haut du deuxième moule.

L'invention a pour but de proposer un agencement permettant de pallier cet inconvénient.

A cet effet, et selon un premier aspect, l'invention propose un procédé de réalisation d'un écran de protection acoustique pour moteur de véhicule automobile, ledit procédé comprenant les étapes suivantes :
- prévoir une feuille métallique réfléchissante de protection thermique, ladite feuille étant pourvue d'une pluralité de micro-perforations,
- prévoir un matelas de fibres comprenant une résine thermodurcissable,
- superposer ladite feuille et ledit matelas dans un premier moule de thermocompression, de manière à comprimer ledit matelas en liant lesdites fibres entre elles, pour former une couche d'isolation thermique, et de manière à associer ladite feuille à ladite couche par ladite résine, pour obtenir une coque de protection thermique comprenant ladite couche et ladite feuille,
- disposer ladite coque contre la paroi supérieure d'un deuxième moule, ladite paroi étant pourvue d'évents de dégazage, ladite feuille étant tournée vers ladite paroi,
- injecter dans ledit deuxième moule un mélange précurseur de mousse de polyuréthanne poreuse à l'air, la paroi inférieure dudit deuxième moule étant dépourvue de revêtement étanche,
- après expansion de la mousse, démouler l'écran obtenu, dans lequel la mousse forme un support surmoulant ladite couche.

On précise ici que le terme « moteur » doit être considéré au sens large, comprenant entre autres la ligne d'échappement du véhicule, et plus généralement toute partie du véhicule émettant de la chaleur de façon importante, notamment à une température minimale de 200°C.

Avec l'agencement proposé, on obtient un écran dont la face externe du support en mousse présente un aspect très satisfaisant, notamment exempt de cratères ou autres défauts de surface, ceci du fait que les gaz issus de la réaction de formation de la mousse sont évacués par les micro-perforations de la feuille métallique.

En outre, la présence de telles micro-perforations permet aux ondes sonores de traverser la feuille métallique du côté du moteur pour être absorbées par la couche d'isolation et par le support.

Selon un deuxième aspect, l'invention propose un écran obtenu par un tel procédé.

D'autres particularités et avantages de l'invention apparaîtront dans la description qui suit, faite en référence aux figures jointes, dans lesquelles :
- la figure 1 est une vue schématique partielle en coupe d'un écran en cours de fabrication, selon une réalisation, avant son démoulage,
- la figure 2 est une vue schématique partielle en coupe d'un écran selon un mode particulier de réalisation.

En référence aux figures, on décrit un procédé de réalisation d'un écran 1 de protection acoustique pour moteur de véhicule automobile, ledit procédé comprenant les étapes suivantes :
- prévoir une feuille 4 métallique réfléchissante - notamment en aluminium - de protection thermique, ladite feuille étant pourvue d'une pluralité de micro-perforations 19,
- prévoir un matelas de fibres comprenant une résine thermodurcissable, notamment phénolique,
- superposer ladite feuille et ledit matelas dans un premier moule de thermocompression, de manière à comprimer ledit matelas en liant lesdites fibres entre elles, pour former une couche d'isolation 5 thermique, et de manière à associer ladite feuille à ladite couche par ladite résine, pour obtenir une coque de protection thermique comprenant ladite couche et ladite feuille,
- disposer ladite coque contre la paroi supérieure 10 d'un deuxième moule, ladite paroi étant pourvue d'évents 11 de dégazage, ladite feuille étant tournée vers ladite paroi,
- injecter dans ledit deuxième moule un mélange précurseur de mousse de polyuréthanne poreuse à l'air, la paroi inférieure 12 dudit deuxième moule étant dépourvue de revêtement étanche,
- après expansion de la mousse, démouler l'écran 1 obtenu, dans lequel la mousse forme un support 2 surmoulant ladite couche.

Selon une réalisation, la densité surfacique des micro-perforations 19 est comprise entre 400 000 et 600 000 micro-perforations par m².

On décrit à présent un écran 1 de protection acoustique pour moteur de véhicule automobile obtenu par un tel procédé, ledit écran comprenant, disposés successivement l'un sur l'autre :
- une feuille 4 métallique réfléchissante - notamment en aluminium - de protection thermique, ladite feuille étant pourvue d'une pluralité de micro-perforations 19, la densité surfacique des micro-perforations étant notamment comprise entre 400 000 et 600 000 micro-perforations par m²,
- une couche d'isolation 5 thermique à base de fibres liées entre elles par un liant thermodurcissable,
- un support 2 à base de mousse de polyuréthanne poreuse permettant l'absorption acoustique du bruit issu dudit moteur, ledit support surmoulant ladite couche de sorte que la mousse enrobe les fibres de surface de ladite couche, la face externe 18 dudit support - c'est à dire la face opposée à celle recevant ladite couche - étant dépourvue de revêtement étanche de sorte que ladite mousse puisse absorber le bruit issu dudit moteur.

On précise ici que l'enrobage des fibres de surface de la couche d'isolation 5 par la mousse est la conséquence du procédé tel que mis en oeuvre, dans lequel le mélange précurseur de mousse vient enrober lesdites fibres lors de l'expansion de la mousse.

La mousse une fois polymérisée assure donc l'enrobage observé pour les fibres de surface sus-décrites.

Selon une réalisation non représentée, la face externe 18 du support 2 peut être revêtue d'une couche poreuse de revêtement, par exemple de type non tissé, ladite couche poreuse ne faisant pas obstacle à la pénétration des ondes sonores au sein de la mousse dudit support pour y être absorbées.

Selon une réalisation, le support 2 présente une résistance au passage de l'air comprise entre 1000 et 1500 N.s.m⁻³, ce qui lui permet d'absorber correctement les ondes sonores issues du moteur.

Les fibres utilisées sont notamment des fibres minérales - par exemple de verre, de silice ou de roche - choisies selon les caractéristiques de conductivité thermique attendues.

Selon une réalisation, la mousse du support 2 présente une densité comprise entre 0,22 et 0,28, et notamment entre 0,23 et 0,27.

Selon une réalisation, la couche d'isolation 5 présente une conductivité thermique comprise entre 0,055 et 0,061 W.m⁻¹.K⁻¹ à 200°C, et notamment entre 0,057 et 0,059 W.m⁻¹.K⁻¹.

Selon une réalisation, la couche d'isolation 5 présente une résistance au passage de l'air inférieure à 4000 N.s.m⁻³.

Selon une réalisation, la couche d'isolation 5 présente une épaisseur comprise entre 3 et 8 mm.

Selon une réalisation, la couche d'isolation 5 présente une masse surfacique comprise entre 600 et 1000 g/m².

Selon une réalisation, les fibres de la couche d'isolation 5 sont liées entre elles par une résine phénolique.

Selon une réalisation, la feuille 4 métallique présente une épaisseur comprise entre 50 et 150 microns, et notamment entre 70 et 100 microns, une épaisseur aussi faible contribuant à l'allègement de l'écran 1.

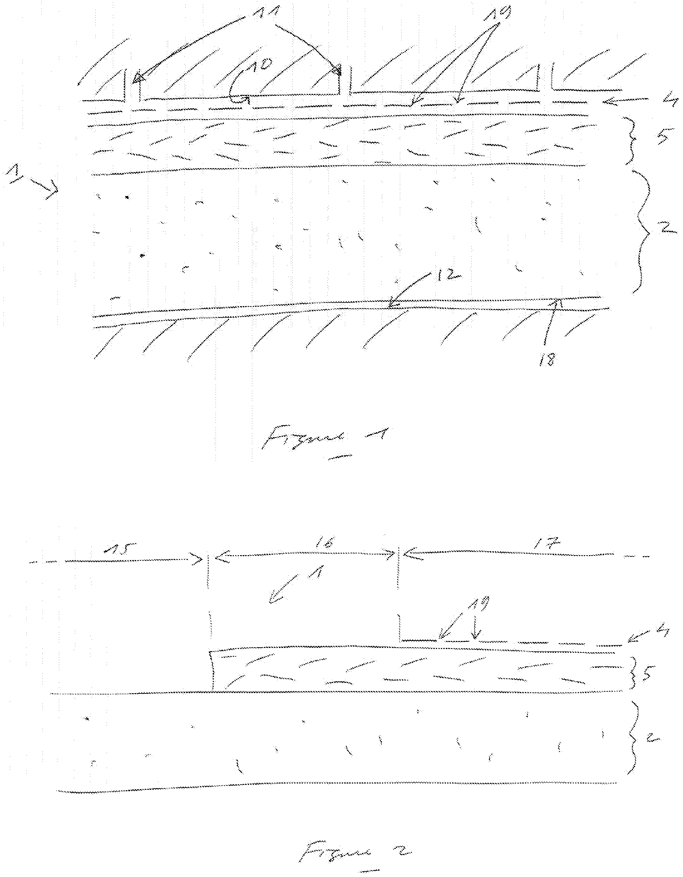

Selon le mode de réalisation particulier représenté en figure 2, la couche d'isolation 5 recouvre partiellement le support 2.

Selon une variante non représentée, la couche d'isolation 5 pourrait recouvrir tout le support 2.

Selon ce même mode de réalisation, la feuille 4 recouvre partiellement la couche d'isolation 5.

On peut ainsi disposer d'un écran 1 dont une première partie 15 du support 2 est dépourvue de protection thermique et/ou - en l'occurrence et, dans le mode de réalisation représenté - une deuxième partie 16 dudit support est protégée uniquement par la couche d'isolation 5, une troisième partie 17 dudit support, destinée à être la plus exposée, étant protégée par ladite couche d'isolation et par la feuille 4 métallique.

## Revendications

1. Procédé de réalisation d'un écran (1) de protection acoustique pour moteur de véhicule automobile, ledit procédé comprenant les étapes suivantes :
• prévoir une feuille (4) métallique réfléchissante de protection thermique, ladite feuille étant pourvue d'une pluralité de micro-perforations (19),
• prévoir un matelas de fibres comprenant une résine thermodurcissable,
• superposer ladite feuille et ledit matelas dans un premier moule de thermocompression, de manière à comprimer ledit matelas en liant lesdites fibres entre elles, pour former une couche d'isolation (5) thermique, et de manière à associer ladite feuille à ladite couche par ladite résine, pour obtenir une coque de protection thermique comprenant ladite couche et ladite feuille,
• disposer ladite coque contre la paroi supérieure (10) d'un deuxième moule, ladite paroi étant pourvue d'évents (11) de dégazage, ladite feuille étant tournée vers ladite paroi,
• injecter dans ledit deuxième moule un mélange précurseur de mousse de polyuréthanne poreuse à l'air, la paroi inférieure (12) dudit deuxième moule étant dépourvue de revêtement étanche,
• après expansion de la mousse, démouler l'écran (1) obtenu, dans lequel la mousse forme un support (2) surmoulant ladite couche.

2. Procédé selon la revendication 1, **caractérisé en ce que** la densité surfacique des micro-perforations (19) est comprise entre 400 000 et 600 000 micro-perforations par m².

3. Ecran (1) de protection acoustique pour moteur de véhicule automobile obtenu par un procédé selon l'une des revendications 1 ou 2, ledit écran comprenant, disposés successivement l'un sur l'autre :
• une feuille (4) métallique réfléchissante - notamment en aluminium - de protection thermique, ladite feuille étant pourvue d'une pluralité de micro-perforations (19), la densité surfacique des micro-perforations étant notamment comprise entre 400 000 et 600 000 micro-perforations par m²,
• une couche d'isolation (5) thermique à base de fibres liées entre elles par un liant thermodurcissable,
• un support (2) à base de mousse de polyuréthanne poreuse permettant l'absorption acoustique du bruit issu dudit moteur, ledit support surmoulant ladite couche de sorte que la mousse enrobe les fibres de surface de ladite couche, la face externe (18) dudit support étant dépourvue de revêtement étanche de sorte que ladite mousse puisse absorber le bruit issu dudit moteur.

4. Ecran selon la revendication 3, **caractérisé en ce que** le support (2) présente une résistance au passage de l'air comprise entre 1000 et 1500 N.s.m⁻³.

5. Ecran selon l'une des revendications 3 ou 4, **caractérisé en ce que** la mousse du support (2) présente une densité comprise entre 0,22 et 0,28, et notamment entre 0,23 et 0,27.

6. Ecran selon l'une quelconque des revendications 3 à 5, **caractérisé en ce que** la couche d'isolation (5) présente une conductivité thermique comprise entre 0,055 et 0,061 W.m⁻¹.K⁻¹ à 200°C, et notamment entre 0,057 et 0,059 W.m⁻¹.K⁻¹.

7. Ecran selon l'une quelconque des revendications 3 à 6, **caractérisé en ce que** la couche d'isolation (5) présente une résistance au passage de l'air inférieure à 4000 N.s.m⁻³.

8. Ecran selon l'une quelconque des revendications 3 à 7, **caractérisé en ce que** la couche d'isolation (5) présente une épaisseur comprise entre 3 et 8 mm.

9. Ecran selon l'une quelconque des revendications 3 à 8, **caractérisé en ce que** la couche d'isolation (5) présente une masse surfacique comprise entre 600 et 1000 g/m².

10. Ecran selon l'une quelconque des revendications 3 à 9, **caractérisé en ce qu'**une première partie (15) du support (2) est dépourvue de protection thermique et/ou une deuxième partie (16) dudit support est protégée uniquement par la couche d'isolation (5), une troisième partie (17) dudit support, destinée à être la plus exposée, étant protégée par ladite couche d'isolation (5) et par la feuille (4) métallique.

## Patentansprüche

1. Verfahren zur Herstellung eines Schallschutzschirms (1) für einen Kraftfahrzeugmotor, wobei das Verfahren die folgenden Schritte umfasst:
- Bereitstellen einer reflektierenden Wärmeschutz-Metallfolie (4), wobei die Folie mit einer Vielzahl von Mikroperforationen (19) versehen ist,
- Bereitstellen einer Fasermatte, die ein thermohärtbares Harz umfasst,
- Übereinanderlegen der Folie und der Matte in einer ersten Thermokompressionsform, um die Matte unter Binden der Fasern aneinander zu komprimieren, um eine Wärmeisolierschicht (5) zu bilden, und um die Folie durch das Harz mit der Schicht zu verbinden, um eine Wärmeschutzschale zu erhalten, die die Schicht und die Folie umfasst,
- Anordnen der Schale an der oberen Wand (10) einer zweiten Form, wobei die Wand mit Entgasungsöffnungen (11) versehen ist, wobei die Folie der Wand zugewandt ist,
- Einspritzen einer luftporösen Polyurethanschaum-Vorläufermischung in die zweite Form, wobei die untere Wand (12) der zweiten Form nicht mit einer dichten Beschichtung versehen ist,
- nach Expansion des Schaums Ausformen des erhaltenen Schirms (1), bei dem der Schaum einen Träger (2) bildet, der die Schicht überformt.

2. Verfahren nach Anspruch 1, **dadurch gekennzeichnet, dass** die Flächendichte der Mikroperforationen (19) im Bereich zwischen 400.000 und 600.000 Mikroperforationen pro m² liegt.

3. Schallschutzschirm (1) für einen Kraftfahrzeugmotor, das über ein Verfahren nach einem der Ansprüche 1 oder 2 erhalten wird, wobei der Schirm der Reihe nach aufeinander angeordnet umfasst:
- eine reflektierende Wärmeschutz-Metallfolie (4) - insbesondere aus Aluminium - wobei die Folie mit einer Vielzahl von Mikroperforationen (19) versehen ist, wobei die Flächendichte der Mikroperforationen insbesondere im Bereich zwischen 400.000 und 600.000 Mikroperforationen pro m² liegt,
- eine Wärmeisolierschicht (5) auf Basis von Fasern, die durch ein thermohärtbares Bindemittel aneinandergebunden sind,
- einen Träger (2) auf Basis von porösem Polyurethanschaum, der die Schallabsorption des aus dem Motor stammenden Geräuschs ermöglicht, wobei der Träger die Schicht so überformt, dass der Schaum die oberflächlichen Fasern der Schicht umhüllt, wobei die Außenseite (18) des Trägers nicht mit einer dichten Beschichtung versehen ist, sodass der Schaum das aus dem Motor stammende Geräusch absorbieren kann.

4. Schirm nach Anspruch 3, **dadurch gekennzeichnet, dass** der Träger (2) einen Luftdurchtrittswiderstand im Bereich zwischen 1.000 und 1.500 N.s.m⁻³ aufweist.

5. Schirm nach einem der Ansprüche 3 oder 4, **dadurch gekennzeichnet, dass** der Schaum des Trägers (2) eine Dichte im Bereich zwischen 0,22 und 0,28, und insbesondere zwischen 0,23 und 0,27 aufweist.

6. Schirm nach einem der Ansprüche 3 bis 5, **dadurch gekennzeichnet, dass** die Isolierschicht (5) bei 200 °C eine Wärmeleitfähigkeit im Bereich zwischen 0,055 und 0,061 W.m⁻¹.K⁻¹, und insbesondere zwischen 0,057 und 0,059 W.m⁻¹.K⁻¹ aufweist.

7. Schirm nach einem der Ansprüche 3 bis 6, **dadurch gekennzeichnet, dass** die Isolierschicht (5) einen Luftdurchtrittswiderstand von kleiner als 4.000 N.s.m⁻³ aufweist.

8. Schirm nach einem der Ansprüche 3 bis 7, **dadurch gekennzeichnet, dass** die Isolierschicht (5) eine Dicke im Bereich zwischen 3 und 8 mm aufweist.

9. Schirm nach einem der Ansprüche 3 bis 8, **dadurch gekennzeichnet, dass** die Isolierschicht (5) ein Flächengewicht im Bereich zwischen 600 und 1.000 g/m² aufweist.

10. Schirm nach einem der Ansprüche 3 bis 9, **dadurch gekennzeichnet, dass** ein erster Teil (15) des Trägers (2) nicht mit einem Wärmeschutz versehen ist, und/oder ein zweiter Teil (16) des Trägers nur von der Isolierschicht (5) geschützt wird, wobei ein dritter Teil (17) des Trägers, der dazu bestimmt ist, am stärksten exponiert zu sein, von der Isolierschicht (5) und von der Metallfolie (4) geschützt wird.

## Claims

1. Method for producing an acoustic protection screen (1) for a motor vehicle engine, said method comprising the following steps:
- providing a reflective metal thermal protection sheet (4), said sheet being provided with a plurality of micro perforations (19),
- providing a batt of fibres containing a thermosetting resin,
- superposing said sheet and said batt in a first thermocompression mould, in such a way as to compress said batt by binding said fibres together, in order to form a thermal insulation layer (5), and so as to combine said sheet with said layer using said resin, so as to obtain a thermal protection shell comprising said layer and said sheet,
- placing said shell against the upper wall (10) of a second mould, said wall being provided with out-gassing vents (11), said sheet facing toward said wall,
- injecting into said second mould an air-porous polyurethane foam precursor mixture, the lower wall (12) of said second mould being free of any fluid-tight coating,
- after the foam has expanded, demoulding the screen (1) obtained, in which screen the foam forms a support (2) overmoulding said layer.

2. Method according to claim 1, **characterised in that** the surface density of the micro-perforations (19) is between 400,000 and 600,000 micro-perforations per m².

3. Acoustic protection screen (1) for a motor vehicle engine obtained by a method according to one of claims 1 or 2, said screen comprising, arranged successively one on the other:
- a reflective metal sheet (4) - in particular made of aluminium - for thermal protection, said sheet being provided with a plurality of micro perforations (19), the surface density of the micro-perforations being in particular between 400,000 and 600,000 micro-perforations per m²,
- a thermal insulation layer (5) of bonded together by a thermosetting binder,
- a support (2) with a porous polyurethane foam base allowing for the acoustic absorption of the noise coming from said engine, said support overmoulding said layer in such a way that the foam coats the surface fibres of said layer, the outer face (18) of said support being free of any fluid-tight coating in such a way that said foam can absorb the noise coming from said engine.

4. Screen according to claim 3, **characterised in that** the support (2) has a resistance to the passing of air between 1000 and 1500 N.s.m⁻³.

5. Screen according to one of claims 3 or 4, **characterised in that** the foam of the support (2) has a density between 0.22 and 0.28, and in particular between 0.23 and 0.27.

6. Screen according to any of claims 3 to 5, **characterised in that** the insulation layer (5) has a thermal conductivity between 0.055 and 0.061 W.m⁻¹.K⁻¹ at 200°C, and in particular between 0.057 and 0.059 W.m⁻¹.K⁻¹.

7. Screen according to any of claims 3 to 6, **characterised in that** the insulation layer (5) has a resistance to the passing of air less than 4000 N.s.m⁻³.

8. Screen according to any of claims 3 to 7, **characterised in that** the insulation layer (5) has a thickness between 3 and 8 mm.

9. Screen according to any of claims 3 to 8, **characterised in that** the insulation layer (5) has a surface density between 600 and 1000 g/m².

10. Screen according to any of claims 3 to 9, **characterised in that** a first portion (15) of the support (2) is free of any thermal protection and/or a second portion (16) of said support is protected only by the insulation layer (5), a third portion (17) of said support, intended to be the most exposed, being protected by said insulation layer (5) and by the metal sheet (4).
